# EUROPEAN PATENT APPLICATION

(11) **EP 0 709 247 A2**
(43) Date of publication of application: **01.05.1996**
(21) Application number: 95307649.4
(22) Date of filing: 26.10.1995
(51) Int. Cl.: B60N 2/00

(54) **Anchorages for vehicle seats**

(30) Priority: 27.10.1994 GB 9421638
(71) Applicant: C.N. UNWIN LIMITED, Yeovil, Somerset BA22 8RP (GB)
(72) Inventor: Unwin, Cecil N., Somerset, BA22 8RP (GB)
(74) Representative: Lainé, Simon James

(57) **Abstract**

A furniture anchorage, particularly for seats, is designed to co-operate with a floor track having a regular array of apertures (1) joined by undercut slots (2). A block (6), marginally narrower than the slots and with integrally cast projections (7), can fit the track, the projections (7) passing down through the apertures and then under the undercut formations as the block (6) is shifted lengthwise. A seat is secured by its legs (3) to one or more of these blocks (6) and carries a plunger (9) which is lowered into one of the apertures after the longitudinal shift to keep the assembly locked in place.

## Description

This invention relates to furniture anchorages, particularly for vehicle seats which have to be firmly held but adjustable.

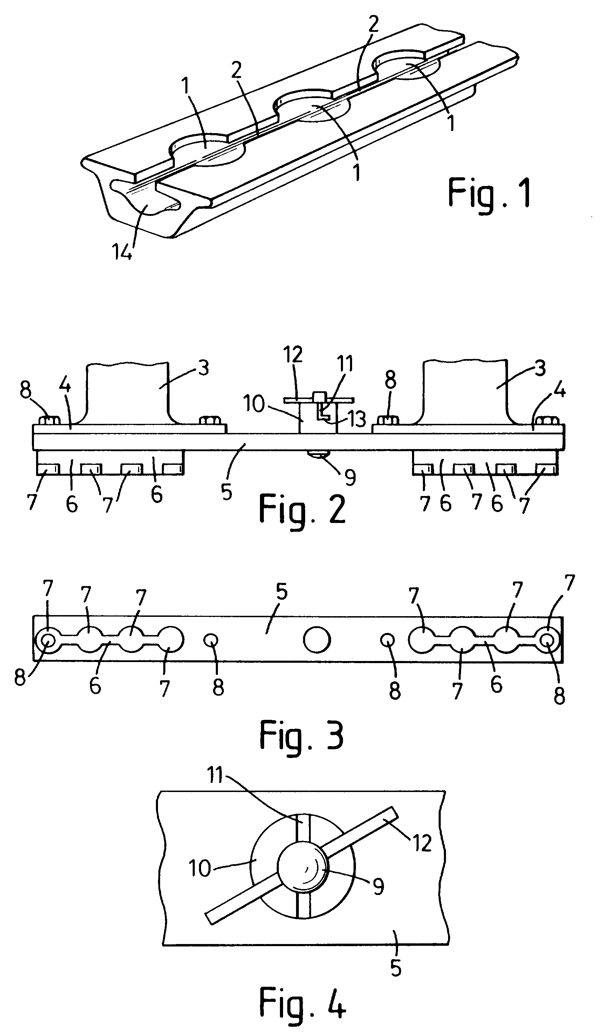

There is a standard type of floor track which is illustrated in Figure 1 of the accompanying drawing. It is fitted substantially flush with the floor and presents a regular array of circular apertures 1 joined by undercut slots 2 aligned with the centres of the apertures. Inverted mushroom-shaped studs on the undersides of a seat frame enter these apertures and then the frame is shifted lengthwise of the track so that the stems of the studs are within the slots 2 and their heads are trapped below the undercut formations. Then a locking plunger carried by the seat frame is lowered into an aperture 2 to stop the frame shifting. Such anchorages are described, for example, in GB-A-2153215 and GB-B-2219493.

The studs can shear or break away if the seat is subjected to sudden severe shock, as in a vehicle collision, and a stronger arrangement is required. Also, when shifting a seat, it can skew slightly as the studs register with the apertures 1, and when further movement is attempted the studs hit the shoulders where the apertures 1 meet the slots 2. At best, there is a rattle as the seat is moved, rather than a smooth sliding action, while at worst, if the seat is shifted forcefully, it can suddenly jam and even damage the track or studs. However, the track itself is generally satisfactory and re-designing that is to be avoided if possible, since it would mean re-equipping a vast number of vehicles.

It is the aim of this invention to provide a stronger and safer seat anchorage.

According to the present invention there is provided a furniture anchorage for a track of the kind having a regular aligned array of apertures interposed by narrower slots defined and flanked by undercut formations, the anchorage comprising a plurality of elements secured to the base of the furniture and capable of simultaneous close passage down through a corresponding number of said apertures, the furniture then being capable of longitudinal movement to trap said elements below the undercut formations, and a locking element carried by the base of the furniture engageable in one of said apertures after such longitudinal movement to prevent further such movement, characterised in that the elements are lateral projections from an elongate block whose width allows close passage through said slots.

Reference will now mostly be made to seats rather than furniture.

The block will conveniently be on the underside of a bar that will overlie the track, the seat then being mounted on the bar with at least one fastening securing the seat penetrating through the bar to anchor in the block. The block may be welded to the bar, or it could be cast integrally with the bar.

In one form, there are two blocks one at each end of the bar with the locking element carried by the bar intermediate the blocks. However, with seats where the legs do not allow this, the bar may have to extend beyond the legs and the locking element would then be carried by the bar on an extended portion. It would then be possible to have just one elongated block below each side of the seat.

For a better understanding of the invention one embodiment will now be described, by way of example, with reference to the remaining figures of the accompanying drawing, in which:
Figure 2 is a side view of the bottom of a seat frame,
Figure 3 is an underneath plan view of the part of the frame of Figure 1, and
Figure 4 is a plan view of a locking plunger seen in Figures 2 and 3.

At each side of a seat, legs 3 are bolted through their base flanges 4 to a horizontal flat bar 5 which will overlie a track of the kind shown in Figure 1. The bar has on its underside, one at each end, two elongate blocks 6, conveniently castings. Their width is such that they will just fit in the slots 2, while along their bottom edges there are laterally projecting lunes 7 which are regularly spaced and sized so that they will just pass through the apertures 1. When the seat is shifted lengthwise of the track, there will (in this example) be the equivalent of eight mushroom studs securely trapped on each side of the seat.

The blocks are conveniently secured to the bar 5 by integrally cast studs (not shown) on their upper faces which fit apertures in the bar. They are then plug welded. Additionally, it will be seen that each leg 3 can have one bolt 8 not just into the thickness of the bar 5 but right through that to the bottom face of the associated block 6. This extra engagement adds substantially to the strength. It would be possible with longer blocks 6 to have all the bolts through such a substantial depth of metal.

The blocks 6 and the bar 5 could be an integral casting, although this is currently thought to be too complex and expensive.

As well as being much stronger than individual studs, the blocks 6 also provide for much smoother, rattle-free adjustment of the seat. There is always a substantial length of each block trapped in the slots 2, which therefore prevent the seat skewing. In other words, the slots 2 and blocks 6 act as guides to keep the seat true to the tracks.

The plunger 9 is guided by a cylindrical housing 10 upstanding from the bar 5 and is spring urged downwardly. The upper end of the housing has a deep diametral slot 11 which can receive a bar handle 12 through the top of the plunger 9. The slot is extended at the bottom by circumferential portions 13 so that it operates like a bayonet socket, enabling the plunger to be positively held down. When it is released, it can be lifted against the spring and turned for the handle to rest on the upper end face of the housing 10.

The circumferential portions 13 may angle down slightly so that as the handle 12 is turned into them there is a wedging action urging the housing 10 up (assuming the plunger 9 is engaging the base of the track). This urges the lunes 7 up against the underside of the undercut formations and inhibits any rattles.

The interior of the base of the track, as can be seen from Figure 1, has a shallow central channel 14 which is primarily to collect dust and grit that may fall into the track. The bottom end of the plunger 9 is domed with a curvature equal to that of the channel 14 so that, when the plunger is wedged down, it does not engage the track with just two diametrically opposed points but along a diametral line. This gives a good frictional grip.

Not all seats have legs 3 with base flanges 4 as illustrated. Some have square U-shaped members at each side, the legs being the uprights of each U. The plunger assembly cannot then be at an intermediate position between the legs. However, the bar 5 can be longer than the U-shaped members and the plunger can equally well be placed at one end or the other, beyond the legs. It would then be possible to have just one elongate block 6 below each bar 5, over most of its length.

## Claims

1. A furniture anchorage for a track of the kind having a regular aligned array of apertures (1) interposed by narrower slots (2) defined and flanked by undercut formations, the anchorage comprising a plurality of elements (7) secured to the base of the furniture and capable of simultaneous close passage down through a corresponding number of said apertures (1), the furniture then being capable of longitudinal movement to trap said elements below the undercut formations, and a locking element (9) carried by the base of the furniture engageable in one of said apertures (1) after such longitudinal movement to prevent further such movement, characterised in that the elements are lateral projections (7) from an elongate block (6) whose width allows close passage through said slots (2).

2. An anchorage as claimed in Claim 1, characterised in that the block (16) is on the underside of a bar (5) that will overlie the track and the furniture is mounted on the bar (5), at least one fastening (8) securing the furniture penetrating through the bar (5) to anchor in the block (16).

3. An anchorage as claimed in Claim 2, characterised in that the block (6) is welded to the bar (5).

4. An anchorage as claimed in Claim 2 or 3, characterised in that there are two blocks (6) one at each end of the bar with the locking element (9) carried by the bar intermediate the blocks.

5. An anchorage as claimed in Claim 2 or 3, characterised in that the bar extends beyond legs at the side of the furniture and the locking element is carried by the bar on an extended portion.

6. An anchorage as claimed in any preceding claim, characterised in that the block (6) and its projections (7) is a casting.
